# EUROPEAN PATENT SPECIFICATION

(11) **EP 0 768 668 B1**
(45) Date of publication and mention of the grant of the patent: **28.11.2001**
(21) Application number: 96870129.2
(22) Date of filing: 09.10.1996
(51) Int. Cl.: G11B 25/06

(54) **Multi-cassette loading system**
Ladesystem für verschiedene Kassetten
Système de chargement pour diverses cassettes

(30) Priority: 11.10.1995 BE 9500846
(43) Date of publication of application: 16.04.1997
(73) Proprietor: STAAR SOCIETE ANONYME, B-1200 Bruxelles (BE)
(72) Inventor: d'Alayer de Costemore d'Arc, Stéphane Marie André, 1474 Ways (BE); Sisopha, Veosamouth, 1150 Brussels (BE)
(74) Representative: Overath, Philippe

(56) References cited:
- EP-A- 0 398 317
- EP-A- 0 415 411
- DE-A- 3 327 403
- DE-A- 4 223 938
- US-A- 4 791 509
- US-A- 5 314 141

## Description

The present invention relates to systems for loading/unloading cassettes in apparatus which record and/or play back data on information carriers that they enclose and more particularly to loading/unloading systems operable with cassettes of different sizes.

Mechanisms have been developed for loading cassettes through an introduction slot in a housing which then performs an horizontal and a vertical movement, see f.i. the EP-A- 0463786 reflecting the preamble of claim 1. Unfortunately, they have proven to be poorly suited to operate with cassettes of different sizes having a substantial discrepancy in width because when a large-size cassette is securely held in the housing, then a small-size cassette barely protrudes from it and thus proves difficult to be picked-up by the user or when the small-size cassette protrudes sufficiently, then the large-size cassette is not securely held because of its large overhang. In addition, the device actuating the elements of the unit to be adapted to the size of the inserted cassette can be positioned only laterally with respect to the housing, something not always convenient. Further, the different cassettes of a same family must have the same thickness. To deal with such drawbacks or limitations, housings have been designed for undergoing a movement in a single direction to transfer the cassette to its operative position :
- the German application DE 33 27 403 discloses a device including a mechanical feeler mounted in the housing which performs just a vertical movement;
- the U.K. application 2,164,193 discloses a cover embodying rails linked by a movable parallelogram which can be displaced for scanning the format of the inserted cassette, the cover being then pivoted;
but they either incorporate a rather complex mechanism to scan the size of the inserted cassette and/or require a large stroke for adjusting components of the unit; accordingly, they have not been successful.

In order to overcome the above-mentioned drawbacks, loading systems have been proposed embodying a so-called "drawer mechanism" and incorporating either a dedicated housing for each size of cassettes such as disclosed in the EP-A- 0398317 or a single housing which further incorporates positioning and/or driving means for a small-size cassette such as described in the EP-A- 0415411. These loading systems occupy too large a volume, are rather complicated and thus, none has achieved a commercial success.

Accordingly, the main object of the present invention is to overcome the above-mentioned drawbacks by providing a simple, reliable and compact system which ensures the loading of cassettes of different sizes and simultaneously adapts the driving, recording and/or playback elements of the unit to the size of the inserted cassette.

A further object of the present invention is to utilize means already existing in loading systems to minimize increase in the number of parts, costs, required volume or overall height.

A device according to the invention is defined in appended claim 1. Further embodiments are defined in dependent claims 2 to 10.

Further advantages, particularities and features will appear from the following, non-limiting description to which further improvements, modifications can be brought without departing from the scope of the invention, in conjunction with the drawings, in which:

Fig. 1 is a top view of a loading/unloading system incorporating the device of the invention in its eject/inoperative position; no cassette being placed therein.

Fig. 2 is a lateral end view of the mechanism appearing on Fig. 1.

Fig. 3 is a partial view similar to Fig. 1, the mechanism having transferred a cassette of large size above its operative position.

Fig. 4 is a partial view similar to Fig. 2, the mechanism being in the position of Fig. 3.

Fig. 5 is similar to Fig. 4, the cassette being a small-size one.

Fig. 6 is a partial perspective view of the device shown on Fig. 5.

Fig. 7 is a detail of some elements of Fig. 5.

Fig. 8 is similar to Fig. 4, the cassette being in operative position.

Figs. 9 and 9A are similar to Fig. 8 and show a specific element in two different positions.

Fig. 10 is a detail of an assembly appearing in Figs. 1 to 6, shown in two operative positions.

For clarity and simplicity, only the elements required for the understanding of the invention appear on each figure. In the described embodiment, the cassettes are the Standard (large size) and Mini (small size) ones of the DVC (Digital Video Cassette) format. A Professional DVC is intermediate in plan view but not used for consumer applications. Those cassettes are parallelepiped, different in thickness, their shells being of different sizes in plan view.

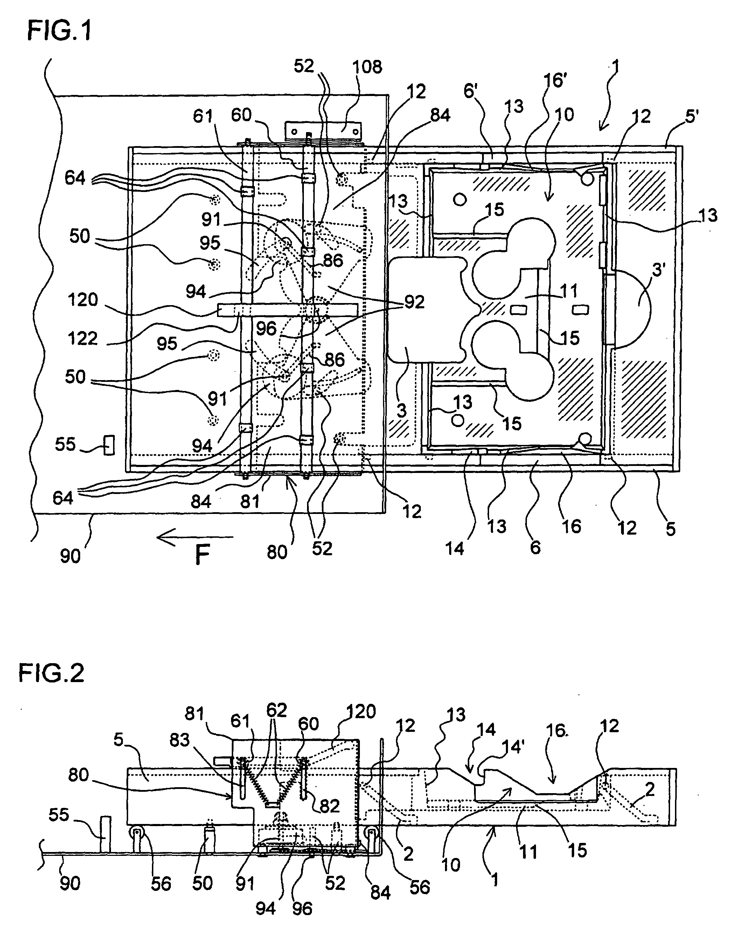

Turning to Figs. 1 and 2, the loading/unloading system mainly comprises a drawer 1 incorporating a housing 10, the pattern of which is slightly larger than that of the largest cassette and includes peripheral walls 13 defining a cassette location which are slightly tilted outwards to ensure easy centering of such a cassette. This housing 10 includes in its bottom wall, in the portion close to the main frame 90, a shallow recess 11 slightly larger than the Mini cassette with peripheral walls 15, slightly tilted outwards, defining a location for such a cassette. Further, several openings are provided in this bottom wall to allow passage of all elements having to cooperate with any cassette and its information carrier, such as those setting said carrier at the operative level and the driving and/or playback, record means in operation. The housing 10 bears at its corners studs 12 engaging inclined grooves 2 inside lateral elements, such as walls 5, 5', of the drawer 1 to allow a vertical movement of the housing 10 relative to the drawer 1 to lower, upon loading movement, an inserted cassette onto the reference supports 50, 52 and driving means 94 or raise it from there before ejection from the unit. Close to the housing 10, apertures 3, 3' are provided in the drawer to improve pick-up, removal of any cassette therefrom.

The drawer 1 is supported horizontally by wheels 56 fixed on the main frame 90 and is driven by an electric micromotor and a gear-train, elements both well-known, thus not shown. As in any cassette/ cartridge apparatus, pressure or engaging means are provided to cooperate with the cassette/cartridge, once in operative position, to push it on reference supports 50, 52 setting its level with respect to the record/playback means.

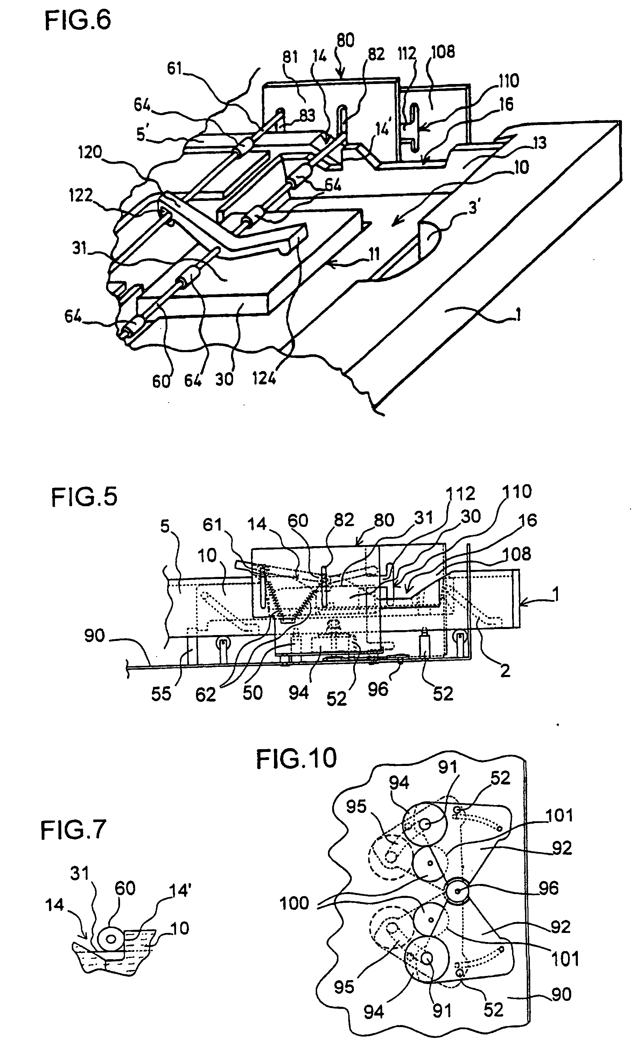

According to a preferred embodiment, those pressure or engaging means consist of two rollers 60, 61, free to rotate, undergoing the action of resilient means 62 pulling them towards the main frame 90. Each roller is guided and supported at its ends by a pair of grooves 82, 83 formed in the lateral walls 81 of a U-shaped support 80 which is movable relative to the frame 90 thanks to studs and grooves, not shown, located at the corners of its horizontal plate 84. A lever 120 is connected to both rollers 60, 61, one serving as a pivot, the other one as a driver. Two symmetrical grooves 86 are provided in the plate 84 for the passage of a pair of shafts 91; each shaft is guided by an arcuate slot 95 in the main frame 90, riveted on a triangular plate 92 (Fig. 10) which rotates around a common shaft 96 mounted on the main frame 90 and supports a driving spool 94 for a cassette reel. Accordingly, a translation of the support 80 for instance in the loading direction of the drawer 1 (Fig. 1- arrow F) powers the simultaneous rotation of the two triangular plates 92 because of the interaction of the grooves 86 and slots 95 on the shafts 91, resulting in a variation of the center-to-center distance of the driving spools 94 between a position shown on Fig. 10 in full line and corresponding to that of the reels of a large-size cassette and the position shown in dash lines for a small-size cassette. The spools 94 can be driven either directly by an electric motor or by gears 100 with their periphery 101 always meshing with the spools 94 when the latter are moved from one position to the other.

In carrying out the present invention, the rollers 60, 61 cooperate with the drawer 1 and the housing 10 by providing a connection which can be enabled to coordinate the movements of said drawer and said movable support 80 to adjust automatically the spacing of the driving means 94, or disabled to keep the spacing of said driving means unchanged.

As shown on Figs. 2 and 6, the periphery of the two rollers 60, 61 rides on the upper edge of the lateral walls 5, 5' of the drawer 1, the profile of which (Figs. 2, 4, 6, 7) is first horizontal, then tilted in the vicinity of notches 14 located in the lateral walls 13 of the housing 10 and providing edges 14'to let said rollers stay clear of or engage a cassette placed in the housing 10.

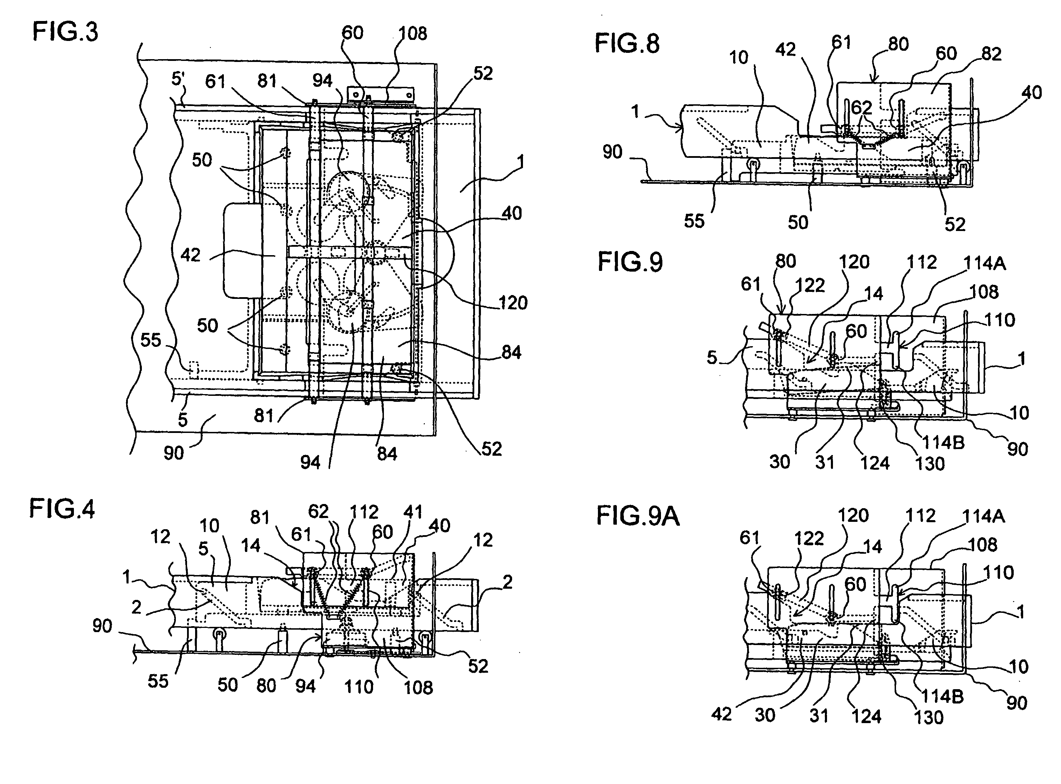

With a large-size cassette 40 placed in the housing 10, upon inward movement of the drawer (Figs. 3, 4), both rollers 60, 61 leave the edge of the walls 5, 5' and engage the upper surface 41 of the cassette shell. Said surface 41 being at a level equal to or slightly higher than the upper edge of the housing 10, the rollers stay clear of elements such as the notches 14 of the housing. Thus, the support 80 stays inactive in the position shown on Fig. 4 and in the most preferred embodiment, it is locked there by the engagement of the roller 60 or its shaft in the groove 110 provided in a retainer 108 (more visible on Figs. 6, 9) in the form of a lateral vertical plate mounted on the frame laterally and adjacent to the drawer 1. This groove 110 has, viewed from the side, an horizontal T-shape and the roller 60 can exit only when at the level of its horizontal section 112. In case of a large-size cassette or no cassette at all, the roller 60 or its shaft remains engaged in the vertical section 114A resp. 114B (see Figs. 9, 9A), thus preventing any displacement of the support 80 (Figs. 4, 8).

Near the end of stroke of the drawer 1, the front part of the housing 10 comes against an abutment 55 mounted on the main frame 90 and further translation of the drawer 1 powers, through the studs 12 guided by the grooves 2, the lowering of the housing 10 and the cassette 40. The rollers 60, 61 undergoing the action of the resilient means 62 push the cassette 40 on its reference supports 50, 52 and driving means 94 with the specified pressure (Fig. 8). As can be acknowledged, the relative position of the rollers 60, 61 ensures an appropriate distribution of the pressure forces on the shell of the cassette 40 while allowing opening of its shutter 42 protecting the information carrier. As shown on Figs. 1 and 6, spaced rubber bands 64 can be placed on the rollers 60, 61 to apply pressure where the established standard requires, f.i. where the cassette shell has thicker walls.

Turning now to Figs. 5, 6 with a small-size cassette 30 in the recess 11 of the housing., upon inward movement of the drawer, the roller 61 stays on the edge of the walls 5, 5' while the roller 60 moves down, engages the upper surface 31 of the cassette shell and faces the horizontal section 112 of the groove 110; accordingly the roller 60 can exit from the retainer 108. Because the level of the surface 31 is below the top level of the vertical edges 14', the roller 60 abuts against said edges 14' (Fig. 7) and connect the support 80 to the drawer 1. Then, the support 80 is translated by the drawer in the direction of the arrow F (Fig. 1) and both shafts 91 rotate the plates 92 (Fig. 10). The coordination of the movement of the drawer 1, housing 10 and support 80 sets the driving spools 94 at the appropriate spacing (Fig. 5) before the housing 10 comes against the abutment 55 to lower the cassette 30. Simultaneously, the roller 61 stays clear of the cassette 30, while the roller 60, actuated by the resilient means 62, pushes it on the reference supports 50, 52 and driving spools 94 (Figs. 5,9).

Because cassettes 30, 40 are set on reference supports 52 in operative position, it can be advantageous for either improving the efficiency and reliability of the present device or handling different cassettes of similar thickness to space the bottom surfaces of the housing 10 and recess 11 more apart to increase temporarily the difference of levels between the upper surfaces 31, 41 of the different cassettes. It can also be appreciated that, by providing an additional recess with corresponding notches, the present loading system could handle a third cassette, f.i. the Professional DVC.

In the DVC format, electronic memories are provided within each cassette 30, 40 with contacts at their rear end for engagement by terminals 130 mounted on the plate 84. However, it has been noted that, because of the resilience of said terminals, the cassette 30 may be tilted (Fig. 9) in operative position and thus playback/ record quality or interface with the electronic memory can be hampered. To overcome such drawback, the lever 120 (Figs. 6, 9, 9A) is actuated by the rollers 60, 61 while its other end 124 has a rounded shape for acting on the upper surface 31 of the housing of a small cassette 30. So, when the roller 60 moves downwards while the roller 61 stays on the edge of the walls 5, 5', the lever 120 is pivoted clockwise around roller 61, slides along the oblong aperture 122 while its end 124 pushes the rear end of the cassette 30 downwards to set it perfectly horizontal and ensure correct engagement of the terminals 130 by the memory contacts. When the cassette reaches its operative position (Fig. 9A), the roller 61 moves slightly downwards along the tilted edge of the notches 14 and thus pivots the lever 120 counter-clockwise as the roller 60 does not move; so its end 124 is clear of the cassette 30 as no pressure should be applied there in operative mode.

When any cassette set in operative position (Figs. 8, 9A) has to be ejected, the drawer 1 is translated in the opposite direction, for instance by reversing the polarity of the power supply to its micro-motor. First, the housing 10 is moved upwards, towards the drawer 1 by the studs 12 sliding in the grooves 2 to clear the cassette 30, 40 from the reference supports 50, 52 and driving means 94. Simultaneously, the rollers 60, 61 are moved upwards (Figs. 4,5) and the drawer 1 being still translated, both roll on the edges of the lateral walls 5, 5' which bring them back to their inoperative level. Resilient means attached between the plate 84 and the frame 90 or an abutment fixed on the drawer 1, translates the support 80 back to the position of Fig. 1 if a small-size cassette 30 was in operative position. Upon completing its translation, the drawer brings the cassettes 30, 40 in their eject position (Fig. 1) for pick-up by the user, this being improved by providing additional openings 6, 6' and 16, 16' in the lateral walls of the drawer 1 and the housing 10.

Instead of rollers 60, 61, rods or bars, such as presently foreseen in the loading mechanisms of the drawer type designed for a single size of cassette (for instance VHS units), can be used, once fitted with wheels or flanges, to keep the same existing parts.

Thanks to this design, the present invention enables the loading mechanisms and thus the existing units to keep their original height, that is to say the one for a large-size cassette and in addition the space that they occupy and is needed for their movement is not increased. Further, no specific part has to be added to coordinate the movement of the drawer and the spacing of the driving means.
- 1: drawer
- 2: inclined grooves
- 3, 3': apertures
- 5, 5': lateral walls
- 6, 6': openings
- 10: housing
- 11: recess
- 12: studs
- 13: peripheral walls
- 14: notches
- 14': vertical edge
- 15: peripheral walls
- 16, 16': openings
- 30: small-size cassette
- 31: upper surface of 30
- 40: large-size cassette
- 41: upper surface of 40
- 42: shutter
- 50, 52: supports
- 55: abutment
- 56: wheels
- 60, 61: engaging means, rollers
- 62: resilient means
- 64: spaced rubber bands
- 80: U-shaped support
- 81: spaced rubber bands
- 81: lateral wall
- 82, 83: grooves
- 84: horizontal plate
- 86: symmetrical grooves
- 90: main frame
- 91: pair of shafts
- 92: plates
- 94: driving spools
- 95: arcuate slots
- 96: common shaft
- 100: gears
- 101: periphery of the gears
- 108: retainer
- 110: groove
- 112: horizontal section
- 114A, 114B: vertical sections
- 120: lever
- 122: oblong aperture
- 124: other end of lever 120
- 130: terminals

## Claims

1. Device for transferring, in a record/playback unit, cassettes (30, 40) of different sizes having reels spaced at different distances between loading and operative positions, said transfer device ( 1 ) comprising :
a movable housing (10) associated to engaging means (60, 61) co-operating with a cassette placed therein to push the cassette, when in operative position, on the cassette driving means (94) mounted on a main frame (90),
a mechanism (80) adjusting the spacing of said cassette driving means (94) to that of the reels of an inserted cassette,
**characterised in that**
said engaging means (60, 61) provide a connection between said adjusting mechanism (80) and said transfer device (1) having a cassette placed therein, said connection being either disabled when the engaging means (60, 61) are at a first level where they stay clear of said transfer device (1) to keep said adjusting mechanism (80) inactive or, enabled when said engaging means (60, 61) are at a second level where they engage the transfer device (1) during its actuation to connect and power the adjusting mechanism (80).

2. Device according to claim 1, **characterised in that** said engaging means (60, 61) are supported by the lateral walls (5, 5') of the transfer device (1) and guided by said adjusting mechanism (80) and, when set at their second level, engage notches, edges (14, 14') provided on the transfer device (1) and/or its housing (10).

3. Device according to claim 2, **characterised in that** the transfer device (1) and/or its housing (10) includes a notch (14) providing an edge (14') of an height greater than the one of a small-size cassette (30) placed therein so that said engaging means (60, 61), when engaging said small-size cassette, abut against said edge (14') to connect the adjusting mechanism (80) to the transfer device (1).

4. Device according to claim 3, **characterised in that** the height of the edge (14') is smaller than or equal to that of a large-size cassette (40) to let said engaging means (60, 61) stay clear of said edge (14') to prevent engagement of the transfer device (1) in the presence of a large-size cassette.

5. Device according to any one of the preceding claims, **characterised in that** said engaging means (60,61) include at least one roller.

6. Device according to any one of the preceding claims, **characterised in that** said engaging means (60, 61) include a pair of rollers to distribute pressure on the cassette (30, 40) whatever its size.

7. Device according to any one of the preceding claims, **characterised in that** said engaging means (60, 61) undergo the action of resilient means (62) to push a cassette placed in the housing (10) on the cassette driving means (94).

8. Device according to any one of the preceding claims, **characterised in that** it further includes a retainer (108) mounted on the main frame (90) laterally and adjacent to the transfer device (1), said retainer having a groove (110) co-operating with the engaging means (60, 61) to lock in inoperative position or release said engaging means (60, 61).

9. Device according to any one of the preceding claims, **characterised in that** the engaging means (60, 61) support and power a mobile lever (120) for temporarily pushing a cassette (30) in horizontal position.

10. Device according to any one of the preceding claims, **characterised in that** the housing (10), having the pattern of a large-size cassette, includes a recess (11) defining a location for a small-size cassette, the bottom walls of said housing and said recess being spaced apart to help discriminate the size of the cassette.

## Patentansprüche

1. Vorrichtung zum Übertragen von Kassetten (30, 40) verschiedener Größen, die unterschiedlich beabstandete Spulen aufweisen, zwischen Lade- und Betriebspositionen in einer Aufzeichnungs/Wiedergabe-Einheit, wobei die Übertragungsvorrichtung (1) umfaßt:
ein bewegliches Gehäuse (10), das Eingriffmitteln (60, 61) zugeordnet ist, die mit einer darin angeordneten Kassette zusammenwirken, um die in der Betriebsposition befindliche Kassette auf ein Kassettenantriebsmittel (94) zu schieben, das an einem Hauptrahmen (90) montiert ist,
einen Mechanismus (80), der die Beabstandung des Kassettenantriebsmittels (94) auf diejenige der Spulen einer eingelegten Kassette einstellt;
**dadurch gekennzeichnet, daß**
die Eingriffmittel (60, 61) eine Verbindung zwischen dem Einstellmechanismus (80) und der Übertragungsvorrichtung (1) mit einer darin angeordneten Kassette bewirken, wobei die Verbindung entweder unterbunden ist, wenn die Eingriffmittel (60, 61) sich auf einer ersten Ebene befinden, in der sie von der Übertragungsvorrichtung (1) frei bleiben, um den Einstellmechanismus (80) inaktiv zu halten, oder ermöglicht ist, wenn die Eingriffmittel (60, 61) sich auf einer zweiten Ebene befinden, in der sie mit der Übertragungsvorrichtung (1) während ihrer Betätigung in Eingriff sind, um den Einstellmechanismus (80) zu verbinden und anzutreiben.

2. Vorrichtung nach Anspruch 1, **dadurch gekennzeichnet, daß** die Eingriffmittel (60, 61) von den Seitenwänden (5, 5') der Übertragungsvorrichtung (1) unterstützt werden und vom Einstellmechanismus (80) geführt werden, und dann, wenn sie sich in ihrer zweiten Ebene befinden, mit Kerben und Kanten (14, 14') in Eingriff sind, die an der Übertragungsvorrichtung (1) und/oder an deren Gehäuse (10) vorgesehen sind.

3. Vorrichtung nach Anspruch 2, **dadurch gekennzeichnet, daß** die Übertragungsvorrichtung (1) und/oder deren Gehäuse (10) eine Kerbe (14) aufweisen, die eine Kante (14') bereitstellt, welche eine größere Höhe aufweist als diejenige einer darin angeordneten kleinen Kassette (30), so daß die Eingriffmittel (60, 61), wenn sie die kleine Kassette greifen, an der Kante (14') anliegen, um den Einstellmechanismus (80) mit der Übertragungsvorrichtung (1) zu verbinden.

4. Vorrichtung nach Anspruch 3, **dadurch gekennzeichnet, daß** die Höhe der Kante (14') gleich oder kleiner ist als diejenige einer großen Kassette (40), um die Eingriffmittel (60, 61) von der Kante (14') freizuhalten, um einen Eingriff der Übertragungsvorrichtung (1) bei Anwesenheit einer großen Kassette zu verhindern.

5. Vorrichtung nach irgendeinem der vorangehenden Ansprüche, **dadurch gekennzeichnet, daß** die Eingriffmittel (60, 61) wenigstens eine Rolle umfassen.

6. Vorrichtung nach irgendeinem der vorangehenden Ansprüche, **dadurch gekennzeichnet, daß** die Eingriffmittel (60, 61) ein Paar von Rollen umfassen, um den Druck auf die Kassette (30, 40) unabhängig von deren Größe zu verteilen.

7. Vorrichtung nach irgendeinem der vorangehenden Ansprüche, **dadurch gekennzeichnet, daß** die Eingriffmittel (60, 61) der Wirkung eines Federmittels (62) unterliegen, um eine im Gehäuse (10) angeordnete Kassette auf das Kassettenantriebsmittel (94) zu schieben.

8. Vorrichtung nach irgendeinem der vorangehenden Ansprüche, **dadurch gekennzeichnet, daß** sie ferner einen Halter (108) aufweist, der am Hauptrahmen (90) seitlich neben der Übertragungsvorrichtung (1) montiert ist, wobei der Halter eine Rille (110) aufweist, die mit den Eingriffmitteln (60, 61) zusammenwirkt, um sie in einer Ruheposition zu verriegeln, oder um die Eingriffmittel (60, 61) freizugeben.

9. Vorrichtung nach irgendeinem der vorangehenden Ansprüche, **dadurch gekennzeichnet, daß** die Eingriffmittel (60, 61) einen beweglichen Hebel (120) unterstützen und antreiben, um eine Kassette (30) vorübergehend in Horizontalrichtung zu schieben.

10. Vorrichtung nach irgendeinem der vorangehenden Ansprüche, **dadurch gekennzeichnet, daß** das Gehäuse (10), das das Muster einer großen Kassette aufweist, eine Aussparung (11) enthält, die einen Ort für eine kleine Kassette definiert, wobei die Bodenwände des Gehäuses und die Aussparung beabstandet sind, um die Unterscheidung der Kassettengröße zu unterstützen.

## Revendications

1. Dispositif assurant le transfert, dans un appareil d'enregistrement/reproduction, de cassettes (30, 40) de différentes tailles ayant des bobines placées à des distances différentes entre des positions de chargement et opératives, ledit dispositif de transfert (1) comprenant:
- un logement mobile (10) associé à des moyens d'engagement (60, 61) coopérant avec une cassette qui y est placée pour pousser la cassette, une fois en position opérative, sur les moyens d'entraînement de la cassette (94) montés sur un châssis (90),
- un mécanisme (80) ajustant la distance entre les moyens d'entraînement de la cassette (94) à celle entre les bobines d'une cassette y insérée,
**caractérisé en ce que**:
lesdits moyens d'engagement (60, 61) procurent une liaison entre le mécanisme d'ajustement (80) et ledit dispositif de transfert (1) dans lequel une cassette est placée, cette liaison étant soit non-active lorsque les moyens d'engagement (60, 61) se trouvent à un premier niveau où ils sont dégagés du dispositif de transfert (1) pour laisser le mécanisme d'ajustement (80) inopérant, soit active, lorsque les moyens d'engagement (60, 61) se trouvent à un second niveau où ils coopèrent avec le dispositif de transfert (1) lors de son actionnement pour y lier et actionner le mécanisme d'ajustement (80).

2. Dispositif selon la revendication 1, **caractérisé en ce que** lesdits moyens d'engagement (60, 61) sont portés par les parois latérales (5, 5') du dispositif de transfert (1) et guidés par ledit mécanisme d'ajustement (80) et, lorsque positionnés à leur second niveau, ils rencontrent des encoches, arêtes (14, 14') prévues sur le dispositif de transfert (1) et/ou son logement (10).

3. Dispositif selon la revendication 2, **caractérisé en ce que** le dispositif de transfert (1) et/ou son logement (10) comprend une encoche (14) présentant une arête (14') d'une hauteur supérieure à celle d'une cassette de petite taille (30) y placée de telle sorte que les moyens d'engagement (60, 61), lorsqu'ils coopèrent avec ladite cassette de petite taille, viennent buter contre ladite arête (14') pour lier le mécanisme d'ajustement (80) au dispositif de transfert (1).

4. Dispositif selon la revendication 3, **caractérisé en ce que** la hauteur de l'arête (14') est inférieure ou égale à celle d'une cassette de grande taille pour laisser les moyens d'engagement (60, 61) échapper à l'arête (14') et empêcher leur liaison avec le dispositif de transfert (1) en présence d'une cassette de grande taille.

5. Dispositif selon l'une quelconque des revendica-tions précédentes, **caractérisé en ce que** les moyens d'enga-gement (60, 61) comprennent au moins un rouleau.

6. Dispositif selon l'une quelconque des revendica-tions précédentes, **caractérisé en ce que** les moyens d'enga-gement (60, 61) comprennent une paire de rouleaux pour distribuer la pression sur la cassette (30, 40) quelle qu'en soit la taille.

7. Dispositif selon l'une quelconque des revendica-tions précédentes, **caractérisé en ce que** les moyens d'enga-gement (60, 61) subissent l'action de moyens élastiques (62) pour pousser toute cassette placée dans le logement (10) sur les moyens d'entraînement de la cassette.

8. Dispositif selon l'une quelconque des revendica-tions précédentes, **caractérisé en ce qu'**il comprend en outre un moyen de retenue (108) monté sur le châssis principal (90) latéralement et à proximité du dispositif de transfert (1); ledit moyen de retenue possédant une gorge (110) coopérant avec les moyens d'engagement (60, 61) pour verrouiller en position inopérative ou libérer lesdits moyens d'engagement (60, 61).

9. Dispositif selon l'une quelconque des revendica-tions précédentes, **caractérisé en ce que** les moyens d'enga-gement (60, 61) supportent et actionnent un levier (120) pour temporairement pousser une cassette (30) en position horizontale.

10. Dispositif selon l'une quelconque des revendica-tions précédentes, **caractérisé en ce que** le logement (10) ayant l'empreinte d'une cassette de grande taille, comprend un renfoncement (11) définissant la position d'une cassette de petite taille, les fonds dudit logement et du renfoncement étant situés à des niveaux différents pour aider à discriminer la taille de la cassette.
